Europäisches Patentamt

European Patent Office

Office européen des brevets

(19)

(11) Veröffentlichungsnummer: **0 075 705**
**A2**

(12) # EUROPÄISCHE PATENTANMELDUNG

(21) Anmeldenummer: 82107395.4

(22) Anmeldetag: 13.08.82

(51) Int. Cl.³: **G 02 B 7/26**

(30) Priorität: 30.09.81 DE 3138895

(43) Veröffentlichungstag der Anmeldung:
06.04.83 Patentblatt 83/14

(84) Benannte Vertragsstaaten:
CH FR GB LI

(71) Anmelder: SIEMENS AKTIENGESELLSCHAFT
Berlin und München Wittelsbacherplatz 2
D-8000 München 2(DE)

(72) Erfinder: Winzer, Gerhard, Dr.-Ing.
Günderodestrasse 16
D-8000 München 82(DE)

(54) **Koppelelement zum Ein- oder auch Auskoppeln von Lichtleistung in oder aus einer Lichtleitfaser.**

(57) Das Koppelelement ist mit einer Dickkernfaser ($f_s$) gebildet, die an einem Ende zwei im Winkel zueinander stehende Endflächen($A_e$, $A_a$)aufweist, von denen eine ($A_e$) im wesentlichen senkrecht zur Achse ($A_1$) der ersten Faser verläuft, während die andere, schräg zu dieser Achse verlaufende Endfläche mit einer hochreflektierenden Spiegelschicht(R) versehen ist. An die senkrecht zur Achse ($A_1$) stehende Endfläche ($A_e$) ist eine dünnere, zweite Faser ($f_e$) stoßgekoppelt und von der Seite der ersten Faser ($f_s$) zweigt eine dritte, als Dickkernfaser ausgebildete Faser ($f_a$) schräg ab.

EP 0 075 705 A2

SIEMENS AKTIENGESELLSCHAFT          Unser Zeichen
Berlin und München                  VPA  81 P 7171 E


Koppelelement zum Ein- oder auch Auskoppeln von Lichtleistung in oder aus einer Lichtleitfaser

Die Erfindung bezieht sich gemäß dem Oberbegriff des
Patentanspruchs 1 auf ein Koppelelement zum Ein- oder
Auskoppeln von Lichtleistung in oder aus einer ersten
Lichtleitfaser mit einem zwei im Winkel zueinander
geneigte Endflächen aufweisenden Ende, von denen eine
Endfläche im wesentlichen senkrecht zur Achse der ersten
Lichtleitfaser verläuft und die andere, zur Achse geneigte Endfläche mit einer reflektiertenden Schicht versehen
ist.

Es soll beispielsweise in die Systemfasern eines optischen Datenbusses, welcher als Sternbus mit einem
Reflexmischer realisiert sei, von den Sendern der
Teilnehmer möglichst verlustlos Licht eingekoppelt
und aus den Systemfasern zu den Empfängern der Teilnehmer mit hohem Wirkungsgrad Licht ausgekoppelt werden.

Die Aufgabe der Erfindung ist es daher, ein Koppelelement der genannten Art anzugeben, mit dem möglichst
verlustlos Licht in eine Lichtleitfaser einkoppelbar
ist und aus der Lichtleitfaser Licht mit hohem Wirkungsgrad auskoppelbar ist.

Diese Aufgabe wird durch die im kennzeichnenden Teil
des Patentanspruchs 1 angegebenen Merkmale gelöst.

Vorteilhafte und bevorzugte Ausführungsformen der
Erfindung gehen aus den Unteransprüchen 2 bis 9 hervor.

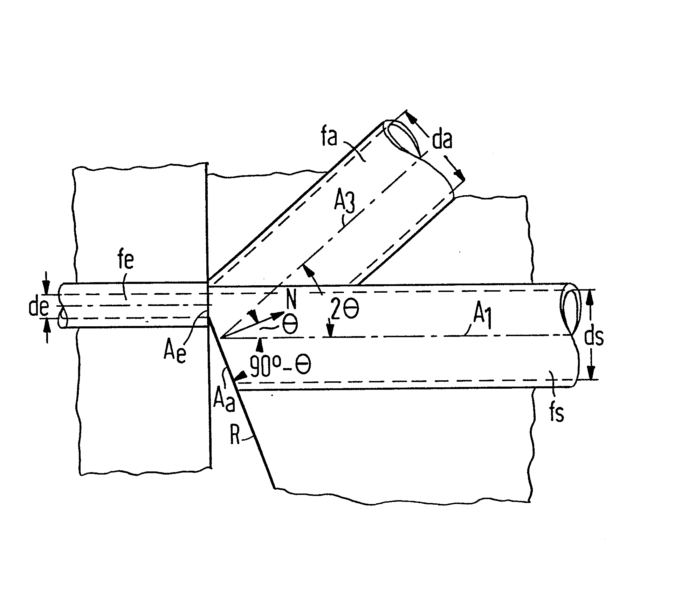

Die Erfindung wird anhand der Figur in der folgenden
Ed 1 Sti/30.9.81

Beschreibung näher erläutert.

Die Figur zeigt in schematischer Darstellung eine Ausführungsform eines vorgeschlagenen Koppelelements.

Gemäß der Figur weist die als Systemfaser dienende erste Lichtleitfaser $f_s$ ein Ende mit zwei im Winkel zueinander stehenden Endflächen $A_e$ und $A_a$ auf. Die Endfläche $A_e$ steht senkrecht zur Achse $A_1$ der ersten Faser $f_s$, während die andere Endfläche $A_a$ in einem Winkel von $90° - \Theta$ zur Achse $A_1$ geneigt ist, der zwischen $45°$ und arc sin $(A_N/n_0)$ liegt. Dabei bedeutet $A_N$ die numerische Apertur der ersten Faser $f_s$ und $n_0$ deren Brechungsindex. Diese geneigte Endfläche $A_a$ ist außerdem mit einer reflektierenden Schicht R bedeckt.

An die senkrecht zur Achse $A_1$ verlaufende Endefläche $A_e$ der ersten Lichtleitfaser $f_s$ ist eine zweite Lichtleitfaser $f_e$ gekoppelt, die als Einkoppelfaser zum Einkoppeln von Licht in die Systemfaser $f_s$ dient. Der lichtführende Bereich der zweiten Faser $f_e$ weist einen Durchmesser auf, der kleiner ist als der Durchmesser $d_s$ des lichtführenden Bereichs der ersten Faser $f_s$ und der Durchmesser $d_a$ des lichtführenden Bereichs einer dritten Lichtleitfaser $f_a$, die seitlich von der ersten Lichtleitfaser $f_s$ abzweigt, und die als eine Auskoppelfaser zum Auskoppeln von Licht aus der ersten Lichtleitfasern $f_s$ dient. An dem fernen Ende dieser Auskoppelfaser $f_a$ ist eine Empfangsdiode angekoppelt.

Die Fasern $f_s$ und $f_a$ sollen Stufenindexfasern sein, $f_e$ ist zweckmäßig auch von diesem Fasertyp, kann aber auch eine Gradientenfaser sein. Die numerischen Aperturen von $f_s$ und $f_a$ sollen gleich sein oder es soll die numerische Apertur der dritten Faser $f_a$ größer sein als die numerische Apertur der ersten Faser $f_s$. Die

numerischen Aperturen der zweiten Faser $f_e$ und der ersten Faser $f_s$ sollen gleich sein oder es soll die numerische Apertur der zweiten Faser $f_e$ kleiner als die numerische Apertur der ersten Faser $f_s$ sein.

Im praktischen Fall kann beispielsweise die numerische Apertur einer jeden der drei Fasern $f_s$, $f_e$, $f_a$ 0,3 betragen, der Durchmesser $d_s$ und $d_a$ des Kerns bzw. lichtführenden Bereichs der ersten Faser $f_s$ bzw. dritten Faser $f_a$ kann 200 /um sein, und der Durchmesser $d_e$ des lichtführenden Bereichs bzw. Kerns der zweiten Faser $f_e$ kann 50 /um gewählt werden.

Das Koppelelement kann in einer Technik hergestellt werden, wie sie beispielsweise aus der DE-OS 30 12 184 (VPA 80 P 7041) bekannt ist oder dort vorgeschlagen worden ist. Das asymmetrische Koppelelement ist besonders für Datenbusse mit Reflexmischer geeignet.

Die Achse $A_3$ der dritten Faser $f_a$ ist zur Achse $A_1$ der ersten Faser $f_s$ in einem Winkel geneigt, der doppelt so groß ist, wie der Winkel $\Theta$, den die Flächennormale N mit der optischen Achse $A_1$ der ersten Faser $f_s$ einschließt. Die dritte Faser $f_a$ stößt seitlich stumpf an die erste Faser $f_s$. Der Spiegel R auf der zur Achse $A_1$ geneigten Endfläche $A_a$ soll hochreflektierend sein.

9 Patentansprüche
1 Figur

Patentansprüche

1. Koppelelement zum Ein- oder auch Auskoppeln von Lichtleistung in oder aus einer ersten Lichtleitfaser mit einem zwei im Winkel zueinander geneigte Endflächen aufweisenden Ende, von denen eine Endfläche im wesentlichen senkrecht zur Achse der ersten Lichtleitfaser verläuft, und die andere, zur Achse geneigte Endfläche mit einer reflektierenden Schicht versehen ist, d a d u r c h   g e k e n n z e i c h n e t , daß an die senkrecht zur Achse verlaufende Endfläche ($A_e$) der ersten Lichtleitfaser ($f_s$) eine zweite Lichtleitfaser ($f_e$) gekoppelt ist, daß seitlich von der ersten Lichtleitfaser ($f_s$) eine dritte Lichtleitfaser ($f_a$) abzweigt, und daß der Durchmesser ($d_e$) des lichtführenden Bereichs der zweiten Faser ($f_e$) kleiner ist als der Durchmesser ($d_s$, $d_a$) des lichtführenden Bereichs der ersten Faser ($f_s$) und auch der dritten Faser ($f_a$).

2. Koppelelement nach Anspruch 1, d a d u r c h   g e k e n n z e i c h n e t , daß die Achse ($A_3$) der dritten Faser ($f_a$) mit der Achse ($A_1$) der ersten Faser ($f_s$) einen Winkel ($2\theta$) einschließt, der doppelt so groß ist, als der Winkel ($\theta$), den die Flächennormale (N) der zur Achse ($A_1$) der ersten Faser ($f_s$) geneigten Endfläche ($A_a$) mit der Achse ($A_1$) der ersten Faser ($f_s$) einschließt.

3. Koppelelement nach Anspruch 1 oder 2, d a d u r c h   g e k e n n z e i c h n e t ,  daß der Winkel ($90^o - \theta$) den die zur Achse ($A_1$) der ersten Faser ($f_s$) geneigte Endfläche ($A_a$) mit der Achse ($A_1$) der ersten Faser ($f_s$) einschließt, einen Wert zwischen $45^o$ und arc sin ($A_N/n_0$) aufweist, wobei $A_N$ die numerische Apertur der ersten Faser ($F_s$) und $n_0$ den Brechungsindex des lichtführenden Bereichs dieser Faser bedeuten.

4. Koppelelement nach einem der vorhergehenden Ansprüche, d a d u r c h   g e k e n n z e i c h n e t , daß die numerische Apertur der dritten Faser ($f_a$) gleich der numerischen Apertur der ersten Faser ($f_s$) oder größer als diese ist.

5. Koppelelement nach einem der vorhergehenden Ansprüche, d a d u r c h   g e k e n n z e i c h n e t , daß die numerische Apertur der zweiten Faser ($f_e$) gleich der numerischen Apertur der ersten Faser ($f_s$) oder kleiner als diese ist.

6. Koppelelement nach einem der vorhergehenden Ansprüche, d a d u r c h   g e k e n n z e i c h n e t , daß die erste und dritte Faser ($f_s$, $f_a$) Stufenindexfasern sind.

7. Koppelelement nach einem der vorhergehenden Ansprüche, d a d u r c h   g e k e n n z e i c h n e t , daß die zweite Faser ($f_e$) eine Stufenindexfaser oder eine Gradientenfaser ist.

8. Koppelelement nach einem der vorhergehenden Ansprüche, d a d u r c h   g e k e n n z e i c h n e t , daß die erste und dritte Faser ($f_s$, $f_a$) Dickkernfasern sind.

9. Koppelelement nach Anspruch 8, d a d u r c h   g e k e n n z e i c h n e t , daß alle Fasern eine numerische Apertur von 0,3 aufweisen, daß der Kerndurchmesser ($d_s$, $d_a$) der ersten und dritten Faser etwa 200 μm beträgt, und daß der Kerndurchmesser ($d_e$) der zweiten Faser etwa 50 μm beträgt.